# EUROPEAN PATENT APPLICATION

(11) **EP 1 271 311 A2**
(43) Date of publication of application: **02.01.2003**
(21) Application number: 01310903.8
(22) Date of filing: 27.12.2001
(51) Int. Cl.: G06F 9/445, G06F 11/14

(54) **Upgrading networked device software**

(30) Priority: 30.06.2001 KR 2001038804
(71) Applicant: SAMSUNG ELECTRONICS CO., LTD., Suwon-City, Kyungki-do (KR)
(72) Inventor: Lim, Yong-jun, Dongjak-gu, Seoul (KR)
(74) Representative: Geary, Stuart Lloyd

(57) **Abstract**

A method of upgrading software and a network device for performing the same are provided so that the operation of a network device is not catastrophically affected by a failure occurring while software is being upgraded in a network environment. The method includes upgrading software through the network and checking whether at least one failure occurs during the upgrade, operating the network device based on an old version of the software used before the upgrade is performed when it is determined that at least one failure has occurred, and operating the network device based on a new version of the software to which the old version is upgraded when it is determined that a failure has not occurred. Accordingly, even if the upgrade of the software is not performed normally, the network device can attempt the upgrade of the software without being serviced or without using an external memory device.

## Description

The present invention relates to a method of operating a networked device for upgrading the software of the networked device, the method comprising attempting to receive upgrade software from a remote station via a network, store the received software in a memory and restart the device, and a device capable of being so operated.

As network environments develop, the need of network service providers, network operators, and networked device users to upgrade software for networked devices increases. Networked devices include mobile and portable telephones and personal computers that can transmit and receive data through a network.

However, when an unexpected failure occurs in a networked device or a network during a software upgrade of the networked device, the upgrade is not completed normally. Moreover, there may be catastrophic consequences for the networked device rendering it inoperable.

In other words, when a failure occurs in a network while a new version of software is being downloaded through the network to upgrade the software of a networked device, the new version of the software cannot be downloaded normally. Here, the problem can be overcome by trying to download the new version again.

However, when an unexpected failure occurs in a networked device while the new version of software is being stored in a storage area in the networked device, from which the old version of the software has been erased, to upgrade the software, the networked device cannot store the new version of the software normally. As a result, the networked device cannot perform functions that use the software.

In the case where software to be upgraded does not greatly influence the operability of a networked device, even when an unexpected failure occurs in the networked device as described above, a problem can be prevented by connecting an interface block provided in the networked device to an external memory device and downloading the software. However, in this case, it is annoying that the external memory device must be managed to store the new version of the software or to store the version of the software which is currently stored in the networked device.

In the case where software to be upgraded is fundamental to the operability of a networked device, for example its operating system (OS), when an unexpected failure occurs in the networked device as described above, the networked device is catastrophically affected and becomes inoperable. Here, the problem cannot be solved by using an external memory device only, as described above. A corresponding chip or the networked device must be replaced.

A method according to the present invention is characterised by retaining an instance of the original software being upgraded and determining whether the upgrade software has been installed successfully, and, on restarting the device, selectively using the original software or the upgrade software in dependence on the determination of whether the upgrade software has been successfully installed.

A networked device, according to the present invention, includes control means, memory and upgrade failure detection means, and the control means and the upgrade failure means are configured for operation of the device according to present invention.

In an embodiment, the method includes the steps of upgrading software through the network and checking whether at least one failure occurs during the upgrade, operating the networked device based on an old version of the software used before the upgrade is performed when it is determined that at least one failure has occurred, and operating the networked device based on a new version of the software to which the old version is upgraded when it is determined that a failure has not occurred.

Preferably, the upgrading of software includes the steps of downloading the new version of the software through the network, copying the old version of the software stored in a first area of the networked device to a second area of the networked device, erasing the old version of the software from the first area of the networked device, and storing the new version of the software in the first area.

Preferably, the failure is a failure in the networked device which is checked during the erasing and storing steps.

In an embodiment of a networked device capable of upgrading software through a network, the networked device includes a monitoring unit for monitoring at least one failure while software is being upgraded; a first memory for storing software necessary for operating the networked device; a second memory for storing information transferred through the network; a controller for performing control to store information, which is downloaded through the network to upgrade the software, in the second memory, and store an old version of the software in an empty area of the first memory before the old version of the software stored in the first memory is upgraded with the information stored in the second memory; and a decoder for selecting a memory, which is used for upgrading the software, between the first memory and the second memory according to a control signal received from the controller and the result of monitoring received from the monitoring unit, and setting an address.

In another embodiment, there is provided a networked device capable of upgrading software through a network. The networked device includes a monitoring unit for monitoring whether at least one failure occurs while software is being upgraded; a first memory for storing software necessary for operating the networked device; a second memory for storing data necessary for operating the networked device; a third memory for storing information transferred through the network; a controller for performing control to store information, which is downloaded through the network to upgrade the software, in the third memory, and store an old version of the software in an empty area of the second memory before the old version of the software stored in the first memory is upgraded to the information stored in the third memory; and a decoder for selecting a memory, which is used for upgrading the software, according to a control signal received from the controller and the result of monitoring received from the monitoring unit, and setting an address.

Embodiments of the present invention will now be described, by way of example, with reference to the accompanying drawings, in which:-
Figure 1 is a block diagram of a networked device according to the present invention; and
Figure 2 is a flowchart of a method of upgrading software according to the present invention.

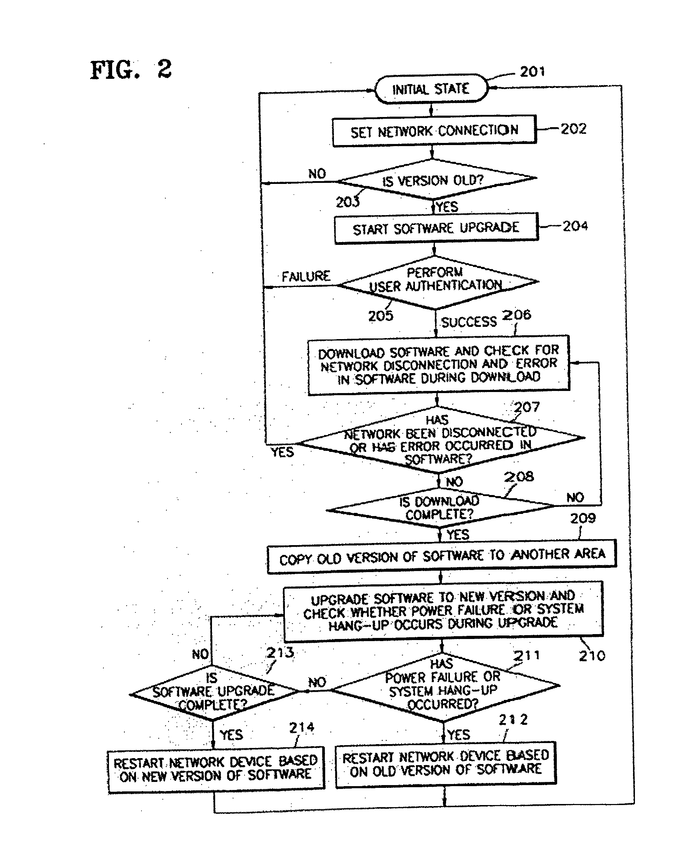

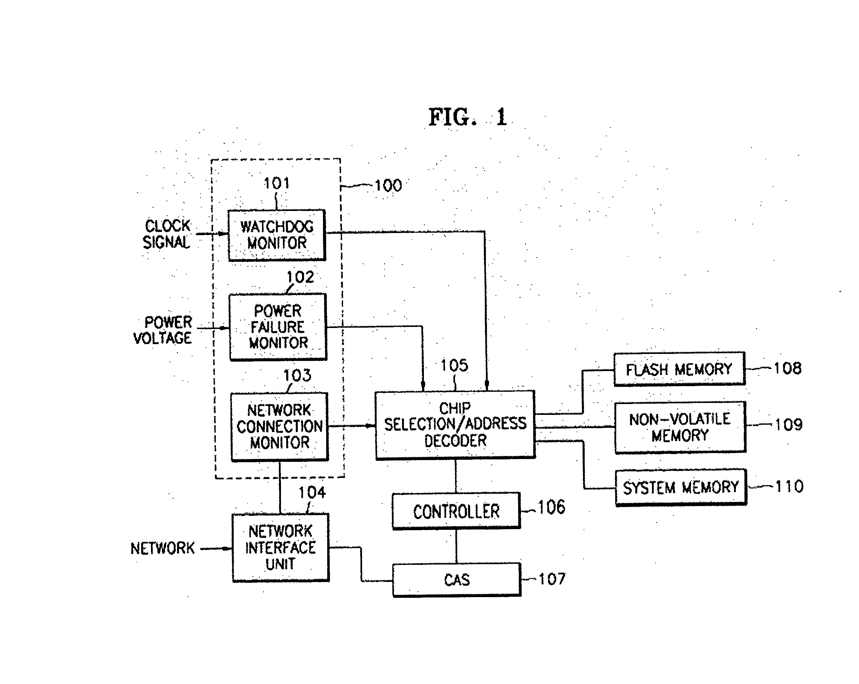

Referring to Figure 1, a networked device according to the present invention includes a monitoring unit 100, a network interface unit 104, a chip selection/address decoder 105, a controller 106, a conditional access system (CAS) 107, a flash memory 108 for storing code data, a non-volatile memory 109 for storing data, and a system memory 110 for storing execution data.

The monitoring unit 100 monitors at least one failure mode while the software of the networked device is being upgraded. The monitoring unit 100 includes a watchdog monitor 101, a power failure monitor 102, and a network connection monitor 103.

The watchdog monitor 101 monitors the generation of a clock signal through which the operation of the networked device can be monitored to determine whether the networked device is operating normally, and sends the monitoring results to the chip selection/address decoder 105.

The power failure monitor 102 monitors whether a power voltage supplied from a power supply (not shown) within the networked device drops below a predetermined level, and sends the monitoring result to the chip selection/address decoder 105.

The network connection monitor 103 monitors the state of data transmitted and received through the network interface unit 104, and sends the monitoring results to the chip selection/address decoder 105.

The network interface unit 104 performs interfacing to allow data communications between a party, which is providing the new version of the software being upgraded through a network (not shown), and the networked device shown in Figure 1. More particularly, the network interface unit 104 can be realized by decoding the received software and checking the received data for errors. Data error checking can be performed by way of a checksum.

The CAS 107 transmits data to and receives data from the party providing software through the network and performs authentication of the networked device for a software upgrade. In other words, the CAS 107 verifies whether the networked device has authority to upgrade corresponding software. Here, upgrading of software can be performed according to the determination of a software provider or at the request of a networked device user.

The flash memory 108 for code data stores software such as an operating system (OS) necessary for operating the networked device. When software stored in the flash memory 108 is upgraded, if the flash memory 108 has an empty area, the old version of the software can be stored in the empty area through the operation of the chip selection/address decoder 105.

The non-volatile memory 109 for data stores data necessary for operating the networked device. In particular, when software stored in the flash memory 108 is upgraded, the old version of the software that has been stored in the flash memory 108 can be stored in an empty area existing in the non-volatile memory 109 through the operation of the chip selection/address decoder 105.

The system memory 110 stores information transmitted through the network when the networked device is driven.

The controller 106 controls the networked device to be able to upgrade software. In other words, once the new version of software to be upgraded is downloaded through the network interface unit 104 and the CAS 107, the controller 106 sends a control signal to the chip selection/address decoder 105 so that the new version of the software can be stored in the system memory 110. Accordingly, the chip selection/address decoder 105 sets a chip selection signal for the system memory 110 and an address to indicate an area of the system memory 110 in which the software is to be stored so that the received new version of the software can be stored in a desired area of the system memory 110.

Next, the controller 106 sends a control signal to the chip selection/address decoder 105 so that the old version of the software stored in the flash memory 108 can be stored in an empty area of the flash memory 108 or in an empty area of the non-volatile memory 109. Accordingly, when the old version of the software is stored in the empty area of the flash memory 108, the chip selection/address decoder 105 sets a chip selection signal and an address so that a path for storing is be set. In other words, the chip selection/address decoder 105 does not change the chip selection signal but changes the address. When the old version of the software is stored in the empty area of the non-volatile memory 109, the chip selection/address decoder 105 sets a chip selection signal and an address so that a path for storing is set. In other words, the chip selection/address decoder 105 changes both the chip selection signal and the address. Here, when the start address of the empty area of the non-volatile memory 109 is the same as the start address of an area where the old version of the software is stored in the flash memory 108, the chip selection/address decoder 105 changes only the chip selection signal. Therefore, the old version of the software stored in the flash memory 108 is copied to another area.

The controller 106 also sends a control signal to the chip selection/address decoder 105 so that the new version of the software stored in the system memory 110 can be stored in an area where the old version of the software is stored in the flash memory 108, thereby upgrading the software. The area where the old version of the software is stored is an area where the original old version of the software is stored in the flash memory 108 before the copying is performed.

The chip selection/address decoder 105 sets a chip selection signal and an address in response to a control signal sent by the controller 106 so that the new version of software stored in the system memory 110 can be stored in the flash memory 108.

While software is being upgraded, the chip selection/address decoder 105 continuously monitors the result of monitoring provided from the monitoring unit 100. When a signal indicating a failure is received from the network connection monitor 103 while the new version of the software is being downloaded to the system memory 110, the chip selection/address decoder 105 is initialized. When a signal indicating a failure is received from the watchdog monitor 101 or the power failure monitor 102 while information stored in the system memory 110 is being stored in the flash memory, the chip selection/address decoder 105 sets a chip selection signal and an address to select a memory necessary for restarting the networked device based on the old version of the software.

Referring to Figure 2, in an initial state in step 201, when the network connection between a software provider and a networked device as shown in Figure 1 is set in step 202, the version of software to be provided by the software provider is compared with the version of the software already in the networked device in step 203. If the version of the software in the networked device is not old, upgrading of the software is not necessary and the operation goes back to step 201 so that the networked device is maintained at the initial state.

If the version of the software provided in the networked device is old, upgrading of the software is started in step 204. User authentication is performed in step 205. In other words, authentication is performed through data transmission between the software provider and the networked device for user authentication, as described with respect to the CAS 107 of Figure 1. The authentication is accomplished by a typical well-known method.

If the user authentication ends in failure in step 205, the networked device does not have authority to upgrade the software. The operation goes back to step 201. In contrast, if the user authentication ends successfully in step 205, the software is downloaded to the system memory 110 and a check is made as to whether a network disconnection has occurred and whether an error has occurred in the data of the received software in step 206. Data error checking for the received software can be performed by way of a checksum.

When it is determined that a network disconnection or data error occurred in step 207, the operation goes back to step 201, and upgrading of software is not performed.

In contrast, when it is determined that neither a network disconnection nor a data error occurred in step 207, a check is made as to whether downloading is complete in step 208. If it is determined that downloading is not complete in step 208, steps 206 and 207 are repeated.

If it is determined that the downloading is complete in step 208, the old version of the software is copied to another area in step 209. Another area may be an empty area of the flash memory 108 or an empty area of the non-volatile memory 109, as described in Figure 1.

In step 210, the software is upgraded to a new version, and it is checked whether a failure such as a power failure or system hang-up occurs in the networked device during the upgrading. Here, for a software upgrade, a path to an area in which the old version of the software is stored is changed to a path to the area to which the old version has been copied. In other words, when the old version has been copied to an empty area of the flash memory 108, the chip selection/address decoder 105 sets a chip selection signal and an address to designate the empty area of the flash memory 108. Next, the original old version of the software is erased from the flash memory 106, and then the new version of the software stored in the system memory 110 is written to the area from which the original old version was erased in the flash memory 106.

While the monitoring unit 100 is checking whether a failure such as a power failure or system hang-up has occured in the networked device during the upgrading, when it is determined that at least one failure has occurred in the networked device in step 211, the networked device is restarted based on the old version of the software in step 212. Then, the operation returns to step 201. In contrast, when it is determined that no failures have occurred in the networked device in step 211, a check is made as to whether the software upgrade has been completed in step 213.

When it is determined that the software upgrade has not been completed in step 213, steps 210 and 211 are repeated. In contrast, when it is determined that the software upgrade has been completed in step 213, the networked device is restarted using the new version of the software in step 214. Then, the operation returns to step 201.

According to the present invention, while software is being upgraded to a new version through a network, if a sudden failure such as hang-up or latch-up of a networked device or a failure in power occurs before the software upgrade is completed normally, the networked device is restarted based on the software of an old version so that the networked device can attempt the upgrade of the software again without being serviced or without using an external memory device.

## Claims

1. A method of operating a networked device for upgrading the software of the networked device, the method comprising attempting to receive upgrade software from a remote station via a network, store the received software in a memory (110) and restart the device, **characterised by** retaining an instance of the original software being upgraded and determining whether the upgrade software has been installed successfully, and, on restarting the device, selectively using the original software or the upgrade software in dependence on the determination of whether the upgrade software has been successfully installed.

2. A networked device including control means (106), memory (108, 109, 110) and upgrade failure detection means (100), wherein the control means (106) and the upgrade failure means (100) are configured for operation of the device according to claim 1.

3. A network device capable of upgrading software through a network, comprising:
monitoring means for monitoring at least one failure while software is being upgraded;
a first memory for storing software necessary for operating the network device;
a second memory for storing information transferred through the network;
a controller for performing control to store information, which is downloaded through the network to upgrade the software, in the second memory, and store an old version of the software in an empty area of the first memory before the old version of the software stored in the first memory is upgraded with the information stored in the second memory; and
a decoder for selecting a memory, which is used for upgrading the software, between the first memory and the second memory according to a control signal received from the controller and the result of monitoring received from the monitoring means, and setting an address.

4. The network device of claim 3, wherein the controller provides a control signal to the decoder to: copy the old version of the predetermined software to the empty area of the first memory, erase the old version of the software stored in an original area of the first memory, and copy the information stored in the second memory to the original area of the first memory.

5. The network device of claim 3, wherein the monitoring means monitors whether a failure in a network device such as a power failure or hang-up of the network device occurs.

6. The network device of claim 3, wherein the monitoring means monitors whether a failure in the network occurs.

7. The network device of claim 3, wherein when the decoder receives a signal indicating that at least one failure has occurred from the monitoring means while the software is being upgraded, the decoder returns to the initial state of the network device.

8. The network device of claim 7, wherein when the failure occurs while the old version of the software is being upgraded after the old version of the software is copied to the empty area of the first memory, the decoder operates so that the network device can be restarted based on the old version of the software.

9. A network device capable of upgrading software through a network, comprising:
monitoring means for monitoring whether at least one failure occurs while software is being upgraded;
a first memory for storing software necessary for operating the network device;
a second memory for storing data necessary for operating the network device;
a third memory for storing information transferred through the network;
a controller for performing control to store information, which is downloaded through the network to upgrade the software, in the third memory, and store an old version of the software in an empty area of the second memory before the old version of the software stored in the first memory is upgraded to the information stored in the third memory; and
a decoder for selecting a memory, which is used for upgrading the software, according to a control signal received from the controller and the result of monitoring received from the monitoring means, and setting an address.

10. A method for upgrading software of a network device through a network, the method comprising the steps of:
upgrading software through the network and checking whether at least one failure occurs during the upgrade;
operating the network device based on an old version of the software used before the upgrade is performed when it is determined that at least one failure has occurred; and
operating the network device based on a new version of the software to which the old version is upgraded when it is determined that a failure has not occurred.

11. The method of claim 10, wherein the upgrading of software comprises the steps of:
downloading the new version of the software through the network;
copying the old version of the software stored in a first area of the network device to a second area of the network device;
erasing the old version of the software from the first area of the network device; and
storing the new version of the software in the first area.

12. The method of claim 11, wherein the failure is a failure in the network device which is checked during the erasing and storing steps.

13. The method of claim 10, wherein the failure comprises a power failure in the network device or hang-up of the network device.

14. The method of claim 10 or 13, wherein the failure comprises a network failure.
